# EUROPÄISCHE PATENTANMELDUNG

(11) **EP 4 793 601 A1**
(43) Veröffentlichungstag der Anmeldung: **19.08.2026**
(21) Anmeldenummer: 26154780.6
(22) Anmeldetag: 28.01.2026
(51) Int. Cl.: G01D 11/30, F16L 41/00, G01L 19/00, G01L 19/06

(54) **SENSORVORRICHTUNG FÜR EIN FLÜSSIGKEITSSYSTEM**

(30) Priorität: 14.02.2025 DE 102025105579
(71) Anmelder: Deutsches Zentrum für Luft- und Raumfahrt e.V., 53227 Bonn (DE)
(72) Erfinder: Klasing, Freerk, 51147 Köln (DE)
(74) Vertreter: dompatent

(57) **Zusammenfassung**

Sensorvorrichtung (1) für ein Flüssigkeitssystem (100) mit einer Flüssigkeit
- mit einer Anschlussvorrichtung (3) zu dem Flüssigkeitssystem (100), wobei die Anschlussvorrichtung (3) einen Flüssigkeitsdurchlass (3a) für die Flüssigkeit bildet, der einen Innendurchmesser dₐ aufweist
- mit einem Behälter (5) mit einem Behälterinnenraum (5a), wobei der Behälter (5) oberhalb der Anschlussvorrichtung (5) angeordnet ist, wobei der Behälterinnenraum (5a) mit dem Flüssigkeitsdurchlass (3a) verbunden ist und ein Volumen V_{b} aufweist,
wobei der Behälter (5) einen unteren Bereich (5b) aufweist, der sich von einem unteren Ende des Behälters (5), an dem die Anschlussvorrichtung (3) angeordnet ist, nach oben erstreckt, wobei im Normalzustand der Behälter (5) in dem unteren Bereich (5b) zum Teil mit Flüssigkeit befüllt ist und eine Temperaturhalteeinrichtung aufweist, wobei die Temperaturhalteeinrichtung die in dem unteren Bereich des Behälters (5b) angeordnete Flüssigkeit auf einer Temperatur oberhalb des Schmelzpunktes T_{S,FI} der Flüssigkeit hält, und einen oberen Bereich (5c) aufweist, der sich von dem unteren Bereich (5a) aus nach oben bis zu einem oberen Ende des Behälters (5) erstreckt, wobei der obere Bereich (5c) einen ersten Abkühlabschnitt für in den oberen Bereich (5c) des Behälters aufsteigende Flüssigkeit bildet, und
- mit einem Sensoranschlussrohr (11), das mit dem Behälter (5) am oberen Ende des Behälters (5) verbunden ist und mit dem Behälter (5) in offener Verbindung steht, wobei das Sensoranschlussrohr (11) einen zweiten Abkühlabschnitt bildet, in dem in das Sensoranschlussrohr (11) aufsteigende die Flüssigkeit unter den Erstarrungspunkt der Flüssigkeit abkühlbar ist, wobei das Sensoranschlussrohr (11) ein Volumen V_{c} aufweist, wobei ein Sensor (13) am Ende des Sensoranschlussrohres (11) angeordnet ist,
wobei gilt: V_{c} « V_{b}.

## Beschreibung

Die vorliegende Erfindung betrifft eine Sensorvorrichtung für ein Flüssigkeitssystem.

Sensorvorrichtungen für Flüssigkeitssysteme können beispielsweise in einem Flüssigkeitssystem den Druck, Temperaturen oder auch chemische Parameter der Flüssigkeit messen.

Die Sensoren für derartige Messungen sind zumeist nur in einem bestimmten Temperaturbereich funktionsfähig und können bei hohen oder tiefen Temperaturen beschädigt werden.

In Hochtemperaturanwendungen gibt es bzgl. Drucksensoren Ansätze, dass zwischen dem zu vermessenden Prozessmedium und dem Drucksensor eine Kühlstrecke angeordnet ist.

Drucksensoren haben jedoch zumeist einen Temperaturbereich, der unterhalb von 150° C liegt, sodass bei vielen flüssigen Prozessmedien, wie beispielsweise Flüssigsalzen oder Flüssigmetallen, der Temperaturbereich des Sensors bereits unterhalb der Schmelztemperatur liegt, sodass eine Kühlstreckenausführung nicht anwendbar ist, da das Prozessmedium in der Kühlstrecke erstarren würde.

Für derartige flüssige Prozessmedien gibt es Ansätze, zwischen dem Sensor und dem Prozessmedium eine Druckmittlermembran und ein inkompressibles Sperrmedium anzuordnen. Die Druckmittlermembran gibt die Drücke des Prozessmediums an das Sperrmedium weiter, sodass an dem Sperrmedium der Druck gemessen werden kann. Das Sperrmedium wird dabei mittels einer Kühlstrecke gekühlt. Da die Druckmittlermembran eine gewisse Federsteifigkeit aufweist und es auch zu unterschiedlichen Wärmeausdehnungen bei dem Sperrmedium und dem Material des die Kühlstrecke bildenden Rohres kommen kann, ist eine derartige Messmethode relativ ungenau. Als Sperrmedium können ferner Mineralöle, Silikonöle, Quecksilber oder Natrium-Kalium zum Einsatz kommen, die einerseits teilweise ein Gefährdungspotenzial besitzen und andererseits auch nur bedingt für Hochtemperaturanwendungen einsetzbar sind, da diese Temperaturgrenzen von 600° C und darunter aufweisen.

Der zuvor beschriebene Stand der Technik gehört zum allgemeinen Kenntnisstand des Anmelders, bezieht sich jedoch nicht notwendigerweise auf einen konkreten, veröffentlichten Stand der Technik.

Es ist daher Aufgabe der vorliegenden Erfindung, eine Sensorvorrichtung für ein Flüssigkeitssystem zu schaffen, die für eine Hochtemperatur- oder Tieftemperaturanwendung geeignet ist und darüber hinaus eine hohe Genauigkeit der Messung bei Vermeidung von Medien mit einem Gefährdungspotential ermöglicht.

Die erfindungsgemäße Sensorvorrichtung ist definiert durch die Merkmale des Anspruchs 1.

Die erfindungsgemäße Sensorvorrichtung für ein Flüssigkeitssystem mit einer Flüssigkeit weist eine Anschlussvorrichtung zu dem Flüssigkeitssystem auf, wobei die Anschlussvorrichtung einen Flüssigkeitsdurchlass für die Flüssigkeit bildet, der einen Innendurchmesser dₐ besitzt. Ferner weist die erfindungsgemäße Sensorvorrichtung einen Behälter mit einem Behälterinnenraum auf, wobei der Behälter oberhalb der Anschlussvorrichtung angeordnet ist, wobei der Behälterinnenraum mit dem Flüssigkeitsdurchlass verbunden ist und ein Volumen V_{b} aufweist. Der Behälter weist einen unteren Bereich auf, der sich von einem unteren Ende des Behälters, an dem die Anschlussvorrichtung angeordnet ist, nach oben erstreckt, wobei im Normalzustand der Behälter in dem unteren Bereich zum Teil mit Flüssigkeit befüllt ist und eine Temperaturhalteeinrichtung aufweist, wobei die Temperaturhalteeinrichtung die in dem unteren Bereich des Behälters angeordnete Flüssigkeit auf einer Temperatur oberhalb des Schmelzpunktes T_{S,Fl} der Flüssigkeit hält. Der Behälter weist ferner einen oberen Bereich auf, der sich von dem unteren Bereich aus nach oben bis zu einem oberen Ende des Behälters erstreckt, wobei der obere Bereich einen ersten Abkühlabschnitt für in den oberen Bereich des Behälters aufsteigende Flüssigkeit bildet. Die erfindungsgemäße Sensorvorrichtung weist ferner ein Sensoranschlussrohr auf, das mit dem Behälter am oberen Ende des Behälters verbunden ist und mit dem Behälter in offener Verbindung steht, wobei das Sensoranschlussrohr einen zweiten Abkühlabschnitt bildet, in dem in das Sensoranschlussrohr aufsteigende die Flüssigkeit unter den Erstarrungspunkt der Flüssigkeit abkühlbar ist, wobei das Sensoranschlussrohr ein Volumen V_{c} aufweist und wobei ein Sensor am Ende des Sensoranschlussrohres angeordnet ist. Für den das Volumen V_{c} des Sensoranschlussrohres und das Volumen V_{b} des Behälters gilt: V_{c} « V_{b}.

Unter offener Verbindung wir im Rahmen der Erfindung verstanden, dass ein Fluid ungehindert aus dem Behälter in das Sensoranschlussrohr gelangen kann.

Die erfindungsgemäße Sensorvorrichtung sieht somit vor, dass an das Flüssigkeitssystem ein Behälter angeschlossen ist. Die Flüssigkeit des Flüssigkeitssystems füllt in einem Normalzustand den unteren Bereich des Behälters. Der untere Bereich des Behälters ist mit einer Temperaturhalteeinrichtung ausgestattet, sodass die Flüssigkeit auf einer Temperatur oberhalb des Schmelzpunktes T_{S,Fl} der Flüssigkeit gehalten wird. Mit anderen Worten: Durch die Temperaturhalteeinrichtung wird verhindert, dass die Flüssigkeit in dem unteren Bereich des Behälters erstarren kann.

In dem oberen Bereich des Behälters, der sich von dem unteren Bereich des Behälters nach oben hin erstreckt, ist ein erster Abkühlabschnitt gebildet. Im Normalzustand befindet sich im oberen Bereich des Behälters keine Flüssigkeit. Sollte durch eine Fehlfunktion des Flüssigkeitssystems der Flüssigkeitspegel in dem Behälter ansteigen, wird die Flüssigkeit in dem oberen Bereich des Behälters, der den ersten Abkühlabschnitt bildet, abgekühlt. Der Behälter kann in dem oberen Bereich des Behälters bereits unter die Schmelztemperatur T_{S,Fl} der Flüssigkeit abgekühlt werden. Da die in dem oberen Bereich des Behälters ansteigende Flüssigkeit nicht unmittelbar erstarrt und beispielsweise eine freie Konvektion bildet, kann es dazu kommen, dass Flüssigkeit auch in das Sensoranschlussrohr aufsteigt. Aufgrund des deutlich geringeren Volumens V_{c} des Sensoranschlussrohres gegenüber dem Volumen V_{b} des Behälters wird sichergestellt, dass in das Sensoranschlussrohr aufsteigende Flüssigkeit schnell weiter abgekühlt wird und in dem Sensoranschlussrohr erstarrt. Dadurch wird verhindert, dass die Flüssigkeit zu dem Sensor gelangen kann.

Während des normalen Betriebs ist oberhalb der Flüssigkeit und somit zum Teil in dem unteren Bereich des Behälters, in dem oberen Bereich des Behälters und in dem Sensoranschlussrohr eine Gasatmosphäre gebildet, wobei mittels des ersten und zweiten Abkühlabschnitts sichergestellt werden kann, dass die Temperatur des Sensors im zulässigen Bereich verbleibt, in dem die Gasatmosphäre entsprechend abgekühlt wird.

Der Sensor kann durch die Gasatmosphäre mittelbar oder bei beispielsweise einem optischen Sensor durch die Gasatmosphäre die entsprechenden Parameter der Flüssigkeit messen.

Das Verhältnis V_{c} ≪ V_{b} bedeutet im Rahmen der Erfindung, dass das Volumen V_{c} mindestens eine Zehnerpotenz kleiner, also mindestens kleiner als ein Zehntel des Volumens V_{b} des Behälters ist.

Das Sensoranschlussrohr und/oder der Flüssigkeitsdurchlass sind vorzugsweise in horizontaler Richtung mittig in Bezug auf den Behälter angeordnet.

Vorzugsweise ist vorgesehen, dass der Behälterinnenraum einen Innendurchmesser d_{b} aufweist, wobei gilt: dₐ < d_{b}, vorzugsweise dₐ « d_{b}. Für das Verhältnis dₐ « d_{b} gilt im Rahmen der Erfindung, dass der Innendurchmesser dₐ mindestens eine Zehnerpotenz kleiner, also mindestens kleiner als ein Zehntel des Durchmessers d_{b} des Behälters ist.

Es kann somit vorgesehen sein, dass der Durchmesser des Flüssigkeitsdurchlasses kleiner ist als der Durchmesser des Behälters. Dadurch kann erreicht werden, dass plötzliche Volumenänderungen der Flüssigkeit in dem Flüssigkeitssystem verzögert in den Behälter gelangen.

Insbesondere kann vorgesehen sein, dass der Flüssigkeitsdurchlass eine Drossel für die Flüssigkeit bildet. Die Drossel kann beispielsweise eine Blende, in der eine Flüssigkeitsöffnung gebildet ist, sein, wobei die Flüssigkeitsöffnung einen Durchmesser d_{a,min} aufweist. Durch die Querschnittsverengung erfolgt eine Drosselwirkung, sodass erreicht werden kann, dass bei starken Druckschwankungen in der Flüssigkeit im Flüssigkeitssystem der Flüssigkeitslevel im Behälter sich nur langsam ändert.

Vorzugsweise ist vorgesehen, dass die Temperaturhalteeinrichtung durch eine Isolierung einer Behälterwand des unteren Bereichs des Behälters und/oder eine Heizeinrichtung gebildet ist. Die Heizeinrichtung kann dabei an oder in der Behälterwand des unteren Bereichs des Behälters angeordnet sein.

Die Isolierung bewirkt, dass im normalen Betrieb der Wärmefluss durch die Isolierung ausreichend gering ist, um die gewünschte Temperatur zu halten. Zusätzlich oder alternativ kann eine Heizeinrichtung vorgesehen sein, die die Flüssigkeit im unteren Bereich des Behälters auf der gewünschten Temperatur hält.

Eine Abkühlung von in den oberen Bereich des Behälters aufsteigender Flüssigkeit in dem durch den oberen Bereich des Behälters gebildeten Kühlabschnitt kann durch natürliche Konvektion an einer Behälterwand des oberen Bereichs des Behälters erfolgen. Die Behälterwand kann dabei an die Flüssigkeit angepasst sein, um eine entsprechend hohe Wärmeleitfähigkeit aufzuweisen. Beispielsweise kann die Behälterwand aus Stahl bestehen.

Zusätzlich oder alternativ kann der obere Bereich des Behälters eine erste Kühleinrichtung aufweisen. Die erste Kühleinrichtung kann an oder in der Behälterwand des oberen Bereichs des Behälters angeordnet sein. Für den Fall, dass Flüssigkeit an der Behälterwand des oberen Bereichs erstarrt, kann die Kühleinrichtung auch eine Heizfunktion aufweisen oder es kann im oberen Bereich des Behälters eine zusätzliche Heizeinrichtung vorgesehen sein. Nach einem Fehlerfall, bei dem Flüssigkeit in den oberen Bereich des Behälters eintritt und dort abgekühlt wird, wobei Flüssigkeit an der Behälterwandung erstarrt, kann nach der Behebung des Fehlers somit an der Behälterwand erstarrte Flüssigkeit aufgetaut werden, sodass keine die Abkühlung in dem ersten Abkühlabschnitt behindernde Flüssigkeitsschicht an der Behälterwandung mehr vorhanden ist.

In einer bevorzugten Ausführungsform der erfindungsgemäßen Sensorvorrichtung ist vorgesehen, dass eine Abkühlung von in das Sensoranschlussrohr aufsteigender Flüssigkeit in dem durch das Sensoranschlussrohr gebildeten zweiten Abkühlabschnitt durch eine vorgegebene Wärmekapazität einer Sensoranschlussrohrwand erfolgt. Mit anderen Worten: Das Sensoranschlussrohr ist derart ausgestaltet, dass die Sensoranschlussrohrwand eine ausreichende Materialmenge zur Verfügung stellt, sodass deren Wärmekapazität ausreichend ist, um die in das Sensoranschlussrohr aufsteigende Flüssigkeit zur Erstarrung zu bringen. Zusätzlich oder alternativ kann das Sensoranschlussrohr auch eine zweite Kühleinrichtung aufweisen. Die zweite Kühleinrichtung kann an oder in der Sensoranschlussrohrwand angeordnet sein. Über die zweite Kühleinrichtung kann das Sensoranschlussrohr gekühlt werden, um sicherzustellen, dass die in das Sensoranschlussrohr aufsteigende Flüssigkeit zur Erstarrung gebracht wird.

Das Sensoranschlussrohr kann auch eine Aufheizvorrichtung aufweisen, über die in dem Sensoranschlussrohr erstarrte Flüssigkeit wieder geschmolzen werden kann.

Grundsätzlich kann die Aufheizvorrichtung auch kombiniert mit der zweiten Kühleinrichtung ausgeführt sein, sodass die kombinierte Vorrichtung sowohl die Aufheiz- als auch die Kühlfunktion zur Verfügung stellt.

Bei der erfindungsgemäßen Sensorvorrichtung kann vorgesehen sein, dass für das Sensoranschlussrohr gilt: ${d}_{ca} = {d}_{c} ⋅ \sqrt{1 + S ⋅ \frac{\left({c}_{p , Fl}⋅\left({T}_{P}-{T}_{S , Fl}\right)+Δ{h}_{S , Fl}\right) ⋅ {ρ}_{Fl}}{{ρ}_{Rohr ⋅ \left({c}_{p , Rohr}⋅\left({T}_{S , Fl}-{T}_{Rohr , nom}\right)\right)}}}$ wobei d_{ca} der Außendurchmesser des Sensoranschlussrohres, d_{c} der Innendurchmesser des Sensoranschlussrohres, S ein vorgegebener Sicherheitsfaktor, C_{p,Fl} die spezifische Wärmekapazität der Flüssigkeit, T_{P} eine maximale Prozesstemperatur gemäß Auslegung des Flüssigkeitssystems, T_{S,Fl} die Schmelztemperatur der Flüssigkeit, Δh_{S,Fl} die Schmelzenthalphie der Flüssigkeit, ρ_{Fl} die Dichte der Flüssigkeit, ρ_{Rohr} die Dichte des Materials der Sensoranschlussrohrwand, C_{p,Rohr} die spezifische Wärmekapazität des Materials der Sensoranschlussrohrwand und T_{Rohr,nom} eine vorgegebene nominelle Temperatur im Sensoranschlussrohr ist.

Über dieses Verhältnis wird sichergestellt, dass das Sensoranschlussrohr eine ausreichende Wärmekapazität zur Verfügung stellen kann, um die Flüssigkeit wie gewünscht zur Erstarrung zu bringen.

Der Sicherheitsfaktor S soll Trägheitseffekte der Wärmeübertragung berücksichtigen. Ein sinnvoller Wert kann dabei zwischen 5 und 10 sein.

Die vorgegebene nominelle Temperatur T_{Rohr,nom} kann beispielsweise die maximal zulässige Sensortemperatur oder auch niedriger sein.

Für den Innendurchmesser d_{c} des Sensoranschlussrohres kann grundsätzlich gelten: 3 mm ≤ d_{c} ≤ 15 mm.

Der Behälter kann einen Innendurchmesser d_{b} aufweisen, für den gelten kann: 20 mm ≤ d_{b} ≤ 120 mm.

Grundsätzlich kann vorgesehen sein, dass der Behälter im Wesentlichen einen konstanten Innendurchmesser d_{b} aufweist und lediglich in Endbereichen sich der Innendurchmesser zu dem Sensoranschlussrohr bzw. dem Flüssigkeitsdurchlass hin verkleinert. Selbstverständlich besteht auch die Möglichkeit, dass der Behälter einen sich verändernden Innendurchmesser aufweist, wobei der Innendurchmesser d_{b} dann der minimale Innendurchmesser beispielswiese im mittleren Bereich des Behälters ist. Grundsätzlich kann gelten, dass der Innendurchmesser d_{c} des Sensoranschlussrohres kleiner ist als der minimale Innendurchmesser des Behälters, insbesondere kleiner als der Innendurchmesser des oberen Bereichs des Behälters, der den ersten Abkühlabschnitt bildet, vorzugsweise mindestens kleiner als ein Zehntel des Innendurchmessers des oberen Bereichs des Behälters.

An dem Flüssigkeitsdurchlass kann ein Spritzschutz angeordnet sein. Über den Spritzschutz wird erreicht, dass keine Flüssigkeit unkontrolliert aus dem Flüssigkeitssystem in den Behälter spritzen kann und somit unkontrolliert in den Bereich des Sensoranschlussrohres gelangen kann.

Der Spritzschutz kann beispielsweise durch ein Prallblech gebildet sein, das mit Abstand von dem Flüssigkeitsdurchlass, den Flüssigkeitsdurchlass überdeckend angeordnet ist. Alternativ besteht auch die Möglichkeit, dass im Bereich des Flüssigkeitsdurchlasses eine Strömungsumlenkung erfolgt.

In dem Behälter und dem Sensoranschlussrohr kann oberhalb der Flüssigkeit ein kompressibles Gas angeordnet sein. Das kompressible Gas bildet in diesem Fall die Gasatmosphäre.

Bei der erfindungsgemäßen Sensorvorrichtung kann ferner vorgesehen sein, dass in dem Behälter eine Füllstandsmessvorrichtung angeordnet ist. Über die Füllstandsmessvorrichtung kann das Flüssigkeitsniveau in dem Behälter gemessen werden. Beispielsweise kann mittels der Füllstandsmessvorrichtung gesteuert werden, ob die erste und/oder zweite Kühleinrichtung angeschaltet oder hochgefahren werden muss.

An dem Sensoranschlussrohr kann auch eine Gasversorgungsleitung angeschlossen sein, über die Gas in das Sensoranschlussrohr einleitbar ist. Mittels der Gasversorgungsleitung kann somit beispielsweise Gas unter Druck in die Sensorvorrichtung eingeleitet werden. Wenn beispielsweise über die Füllstandsmessvorrichtung festgestellt wird, dass der Pegel von Flüssigkeit in dem Behälter ansteigt, kann über die Gasversorgungsleitung Gas unter Druck in das Sensoranschlussrohr und somit in den Behälter eingeleitet werden, um die Flüssigkeit in dem Behälter runterzudrücken und in dem unteren Bereich des Behälters zu halten. Die Gasversorgungsleitung kann grundsätzlich auch an dem oberen Ende des Behälters angeschlossen sein.

Vorzugsweise ist vorgesehen, dass für den Innendurchmesser dₐ des Flüssigkeitsdurchlasses und/oder den Durchmesser d_{a,min} des Blendendurchlasses und/oder den Innendurchmesser d_{c} des Sensoranschlussrohres gilt $> \sqrt{\frac{γ}{{ρ}_{Fl} ⋅ g}}$, vorzugweise $> 2 ⋅ \sqrt{\frac{γ}{{ρ}_{Fl} ⋅ g}}$, wobei ρ_{Fl} die Dichte der Flüssigkeit, γ die Oberflächenspannung des Fluids und g die Erdbeschleunigung ist.

Dadurch wird sichergestellt, dass die entsprechenden Innendurchmesser stets größer als die Kapillarlänge sind, sodass eine Tropfenbildung vermieden wird.

Wenn beispielsweise die Füllstandsmessvorrichtung in den Behälter hineinragende Teile, wie beispielsweise eine Elektrode, aufweist, kann ferner vorgesehen sein, dass das Verhältnis entsprechend für einen Abstand des hineinragenden Teils von der Behälterwand gilt, sodass ebenfalls sichergestellt ist, dass der Abstand des hineinragenden Teils von der Behälterwand größer als die Kapillarlänge der Flüssigkeit ist, sodass eine Tropfenbildung zwischen dem hineinragenden Teil und der Behälterwandung vermieden wird.

Der Sensor kann beispielsweise ein Drucksensor, ein Elektrochemiesensor oder ein Temperatursensor sein. Grundsätzlich können auch andere Sensoren der Flüssigkeitsmesstechnik wie beispielsweise optische Füllstandsfühler oder ähnliche als Sensor vorgesehen sein.

Die erfindungsgemäße Sensorvorrichtung kann in unterschiedlicher Weise ausgelegt und betrieben werden.

Beispielsweise kann eine passive Füllstandsbegrenzung erfolgen, in dem die Dimensionierung des unteren Bereichs des Behälters, des oberen Bereichs des Behälters und des Sensoranschlussrohres entsprechend erfolgt.

Dabei kann der Flüssigkeitslevel durch eine entsprechende Wahl der Volumina dieser drei Bereiche in Abhängigkeit der gemäß Auslegung in dem Flüssigkeitssystem maximal und minimal auftretenden Drücke begrenzt werden.

Beispielsweise kann auch eine erforderliche Höhe des oberen Bereichs des Behälters für einen gegebenen Wärmeübergangskoeffizienten, zum Beispiel bei natürlicher Konvektion, mittels der Wandstärke des Behälters und der Wärmeleitfähigkeit des Materials des Behälters berechnet werden, wobei die erforderliche Höhe auch von einer üblicherweise herrschenden Umgebungstemperatur und einer für den oberen Bereich gewählten Temperatur unterhalb des Schmelzpunktes der Flüssigkeit abhängt.

Wie zuvor beschrieben wurde, kann auch aktiv eine Füllstandsbegrenzung erfolgen, indem bei Erreichen eines Grenzfüllstandes ein entsprechendes Gas dem Behälter zugeführt wird, sodass sich der Druck im oberen Bereich des Behälters und in dem Sensoranschlussrohr erhöht und ein weiteres Ansteigen des Flüssigkeitfüllstandes begrenzt.

Die Füllstandsbegrenzung mittels des Gases erfolgt dabei im normalen Betrieb. In einem Fehlerfall, bei dem das Gas nicht ausreichend ist, um die Flüssigkeit im unteren Bereich des Behälters zu halten, oder bei dem die Gasversorgung defekt ist, können der obere Bereich des Behälters und das Sensoranschlussrohr weiterhin verhindern, dass Flüssigkeit an den Sensor gelangt.

Grundsätzlich kann auch vorgesehen sein, dass ein Mindestflüssigkeitsstand im Behälter eingehalten wird. Ein Mindestflüssigkeitsstand kann beispielsweise bei einigen Arten von Sensoren notwendig sein, um eine Messung zu gewährleisten. Um dies zu erreichen, kann die erfindungsgemäße Sensorvorrichtung auch eine Gasabfuhrvorrichtung vorsehen, über die Gas abgelassen werden kann, sodass sich der Druck im oberen Bereich des Behälters und dem Sensoranschlussrohr verringert, sodass ein Ansteigen des Flüssigkeitsstandes erfolgen kann.

Im Folgenden wird die Erfindung unter Bezugnahme auf die nachfolgenden Figuren im Detail beschrieben.

Es zeigen:
- Fig. 1: eine erste Ausführungsform einer erfindungsgemäßen Sensorvorrichtung und
- Fig. 2: eine zweite Ausführungsform einer erfindungsgemäßen Sensorvorrichtung.

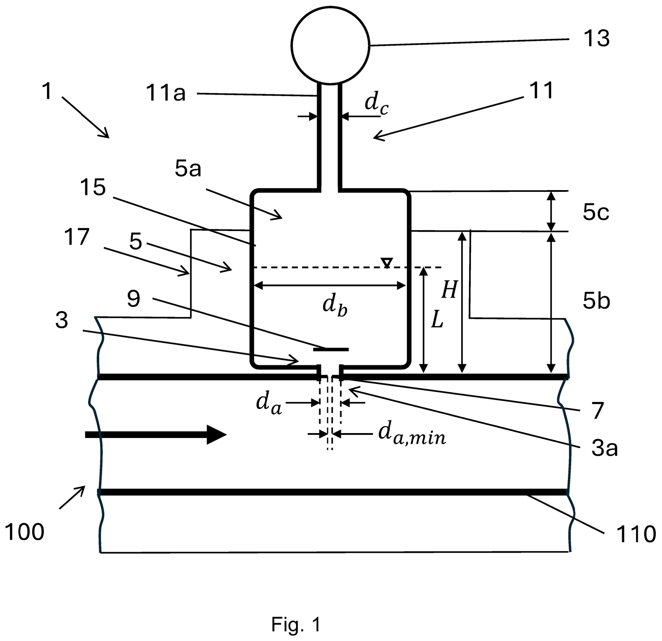

In Fig. 1 ist eine erfindungsgemäße Sensorvorrichtung 1 für ein Flüssigkeitssystem 100 schematisch dargestellt. Die Sensorvorrichtung 1 ist an eine Rohrleitung 110 des Flüssigkeitssystems 100 angeschlossen. Das Flüssigkeitssystem 100 kann beispielsweise Teil eines solarthermischen Kraftwerks sein und eine durch die Rohrleitung 110 geführte Flüssigkeit kann ein Flüssigsalz mit einer Temperatur von beispielsweise 620° C sein.

Die Sensorvorrichtung 1 ist mittels einer Anschlussvorrichtung 3 an die Rohrleitung 110 angeschlossen. Die Anschlussvorrichtung 3 bildet einen Flüssigkeitsdurchlass 3a, der einen Innendurchmesser dₐ aufweist. Die Anschlussvorrichtung 3 ist somit in Fluidverbindung mit der Rohrleitung 110.

Oberhalb der Anschlussvorrichtung 3 ist ein Behälter 5 mit einem Behälterinnenraum 5a angeschlossen, der ein Volumen V_{b} aufweist. Flüssigkeit des Flüssigkeitssystems 100 steigt aus der Rohrleitung 110 durch den Flüssigkeitsdurchlass 3a der Anschlussvorrichtung 3 in den Behälterinnenraum 5a des Behälters 5.

Der Behälterinnenraum 5a weist einen Innendurchmesser d_{b} auf, der deutlich größer als der Innendurchmesser dₐ des Flüssigkeitsdurchlasses 3a ist. Es gilt somit: dₐ ≪ d_{b}. In dem Flüssigkeitsdurchlass 3a ist eine Blende 7 angeordnet, die eine Flüssigkeitsöffnung mit einem Durchmesser d_{a,min} aufweist. Die Blende 7 bildet eines Drossel für die Flüssigkeit, sodass aufgrund der Querschnittsveränderung eine Drosselwirkung auf die Flüssigkeit ausgeübt wird, sodass bei starken Druckschwankungen der Flüssigkeit in der Rohrleitung 110 der Flüssigkeitslevel in dem Behälter 5 sich nur langsam ändert.

Ferner ist oberhalb des Flüssigkeitsdurchlasses 3a ein Prallblech 9 angeordnet, das einen Spritzschutz bildet. Das Prallblech 9 überdeckt den Flüssigkeitsdurchlass 3a, sodass verhindert wird, dass Flüssigkeit unkontrolliert aus der Rohrleitung 110 in den Behälter 5 spritzen kann.

Der Behälter 5 besteht aus einem unteren Bereich 5b, der sich von einem unteren Ende des Behälters 5, an den die Anschlussvorrichtung 3 angeordnet ist, nach oben erstreckt. Im Normalzustand ist der Behälter 5 im unteren Bereich 5b zum Teil mit der Flüssigkeit befüllt.

An den unteren Bereich 5b schließt sich einer oberer Bereich 5c an, der sich bis zu einem oberen Ende des Behälters 5 erstreckt. An dem oberen Ende des Behälters 5 ist ein Sensoranschlussrohr 11 angeschlossen, an dessen von dem Behälter 5 abgewandten Ende ein Sensor 13 angeordnet ist.

Der Behälterinnenraum 5a weist einen Innendurchmesser d_{b} und ein Volumen V_{b} auf. Das Sensoranschlussrohr 11 weist einen Innendurchmesser d_{c} d_{b} und ein Volumen V_{c} auf. Es gilt: V_{c} « V_{b}.

Der Behälterinnenraum 5a wird von einer Behälterwand 15 begrenzt. Die Behälterwand 15 weist in dem unteren Bereich 5b eine Isolierung 17 auf, die als Temperaturhalteeinrichtung wirkt, sodass der Wärmefluss durch die Behälterwand 15 und die Isolierung 17 derart geringgehalten wird, dass in dem unteren Bereich 5b eine gewünschte Temperatur, die oberhalb der Schmelztemperatur T_{S,Fl} der Flüssigkeit ist, gehalten wird. Grundsätzlich kann an dem unteren Bereich 5b auch eine nicht dargestellte Heizeinrichtung vorgesehen sein, die als Temperaturhalteeinrichtung dient.

An dem oberen Bereich 5c des Behälters 5 ist keine Isolierung angeordnet. Der obere Bereich 5c des Behälters 5 dient als ein erster Abkühlabschnitt für Flüssigkeit, die in den oberen Bereich 5c des Behälters 5 aufsteigt. Das Aufsteigen der Flüssigkeit erfolgt üblicherweise nur im Fehlerfall. In dem ersten Abkühlabschnitt kann die Flüssigkeit durch natürliche Konvektion an der Behälterwand 15 abgekühlt werden. Grundsätzlich kann auch zusätzlich eine nicht dargestellte erste Kühleinrichtung an der Behälterwand 15 des oberen Bereichs 5c des Behälters 5 vorgesehen sein. Die Behälterwand 15 kann in dem ersten Abkühlabschnitt, das heißt in dem oberen Bereich 5c, eine Temperatur unterhalb der Schmelztemperatur T_{S,Fl} der Flüssigkeit aufweisen. Durch eine natürliche Konvektion wird die Flüssigkeit umgewälzt und kühlt ab.

Falls die Abkühlung der Flüssigkeit in dem oberen Bereich 5c noch nicht ausreichend ist, um ein Erstarren der gesamten Flüssigkeit zu erreichen und aufgrund ansteigenden Drucks Flüssigkeit in das Sensoranschlussrohr 11 gelangt, ist vorgesehen, dass das Sensoranschlussrohr 11 einen zweiten Abkühlabschnitt für die Flüssigkeit bildet. Dabei kann vorgesehen sein, dass das Sensoranschlussrohr 11 eine Sensoranschlussrohrwand 11a aufweist, die eine vorgegebene Wärmekapazität besitzt, die ausreichend ist, um die notwendige Kühlleistung zur Verfügung zu stellen. Grundsätzlich kann das Sensoranschlussrohr 11 auch eine zweite Kühleinrichtung aufweisen (nicht dargestellt), die eine zusätzliche Kühlleistung zur Verfügung stellt. An dem Sensoranschlussrohr 11 kann auch eine nicht dargestellte Aufheizvorrichtung vorgesehen sein. In dem Fall, in dem Flüssigkeit in das Sensoranschlussrohr 11 gelangt, erstarrt diese aufgrund der niedrigen Temperatur. Um nach Fehlerbehebung zu gewährleisten, dass das Sensoranschlussrohr 11 wieder frei ist, kann mittels einer Aufheizvorrichtung die erstarrte Flüssigkeit geschmolzen werden, sodass diese zurück in den Behälter 5 fließen kann.

Der Innendurchmesser d_{c} des Sensoranschlussrohes 11 kann beispielsweise 5 mm betragen. Der Innendurchmesser d_{b} des Behälters kann beispielsweise 100 mm betragen.

Der normale Füllstand L der Flüssigkeit in dem unteren Bereich 5b ist geringer als die Höhe H des unteren Bereichs 5b. Die Isolierung 17 erstreckt sich über die gesamte Höhe H des unteren Bereichs 5b. Dabei ist die Höhe H des unteren Bereichs 5b derart ausgelegt, dass im Normalbetrieb der Füllstand L sich idealerweise stets unterhalb der Höhe H befindet.

Oberhalb der Flüssigkeit ist ein kompressibles Gas angeordnet, dass sich somit in dem unteren Bereich 5b, dem oberen Bereich 5c des Behälters 5 und dem Sensoranschlussrohr 11 befindet. Der Sensor 13 kann beispielsweise ein Drucksensor sein. Bei einer Änderung des Drucks der Flüssigkeit in dem Rohr 110 gelangt mehr Flüssigkeit in den unteren Bereich 5b des Behälters 5, sodass das sich darüber befindliche Gas komprimiert wird. Anhand des Gases kann der Sensor 13 dann den Druck messen und über eine entsprechende Kalibrierung auf den Druck der Flüssigkeit in der Rohrleitung 110 schließen.

In dem in Fig. 1 dargestellten Ausführungsbeispiel der erfindungsgemäßen Sensorvorrichtung 1 erfolgt eine Regulierung des Füllstandes der Flüssigkeit in dem Behälter 5 auf passive Weise durch eine entsprechende Auslegung der Volumina und Wände der einzelnen Komponenten.

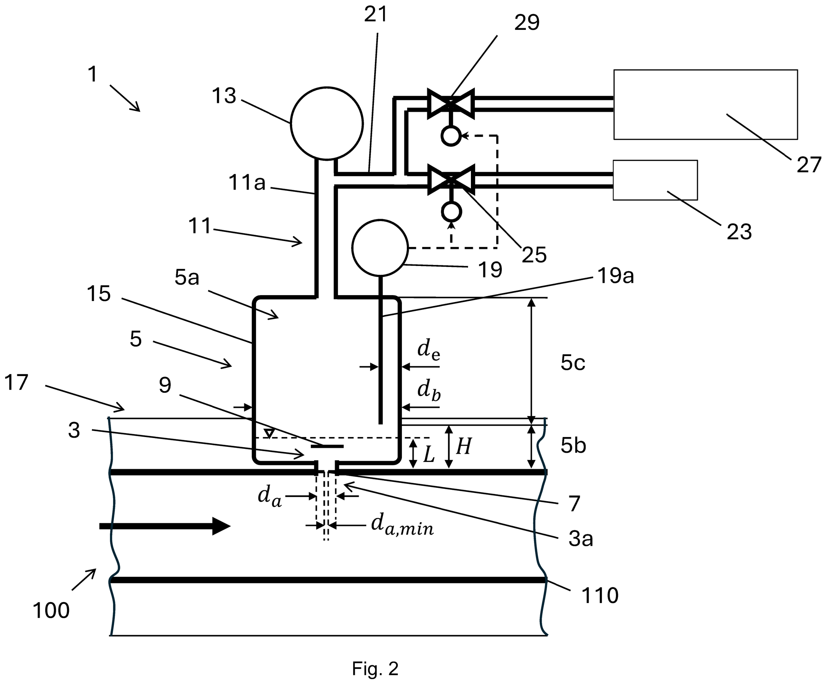

In Fig. 2 ist ein zweites Ausführungsbeispiel einer erfindungsgemäßen Sensorvorrichtung 1 schematisch dargestellt. Die zu dem Ausführungsbeispiel der Fig. 1 gleichen Teile sind mit den gleichen Bezugszeichen versehen.

Das in Fig. 2 dargestellte Ausführungsbeispiel unterscheidet sich von dem in Fig. 1 dargestellten Ausführungsbeispiel dahingehend, dass eine aktive Füllstandsregelung erfolgt.

Der untere Bereich 5b des Behälters 5 ist in diesem Ausführungsbeispiel deutlich kleiner ausgeführt, sodass die Höhe H des unteren Bereichs 5b kleiner ist als die in dem Ausführungsbeispiel der Fig. 1.

Ferner weist die Sensorvorrichtung 1 gemäß dem Ausführungsbeispiel der Fig. 2 eine Füllstandsmessvorrichtung 19 auf, die den Füllstand L der Flüssigkeit in dem Behälterinnenraum 5a misst. Die Füllstandsmessvorrichtung 19 weist dazu beispielsweise eine Elektrode 19a auf, die in den Behälterinnenraum 5a ragt.

An das Sensoranschlussrohr 11 ist eine Gasversorgungsleitung 21 angeschlossen, die mit einem Gasspeicher 23 verbunden ist. Über ein entsprechendes Gasventil 25 kann eine Fluidverbindung zu dem Sensoranschlussrohr 11 geöffnet werden, sodass Gas unter hohem Druck in das Sensoranschlussrohr 11 und den Behälter 5 gelangt und in dem Behälterinnenraum 5a aufsteigende Flüssigkeit hält oder runterdrückt. Die Steuerung des Gasventils 25 kann dabei über den mittels der Füllstandsmessvorrichtung 19 gemessenen Füllstand erfolgen.

Bei dem in Fig. 2 dargestellten Ausführungsbeispiel kann auch vorgesehen sein, dass ein Mindestfüllstand der Flüssigkeit in dem Behälterinnenraum 5a geregelt wird. Dazu kann mittels der Füllstandsmessvorrichtung 19 der Füllstand der Flüssigkeit in dem Behälterinnenraum 5a gemessen werden und bei Unterschreiten des Mindestfüllstandes kann eine Gasauslassvorrichtung 27 bedient werden. Die Gasauslassvorrichtung 27 weist ein Gasauslassventil 29 auf, das geöffnet werden kann, sodass in dem Behälterinnenraum 5 und dem Sensoranschlussrohr 11 enthaltenes Gas zum Teil aus dem System gelassen werden kann, sodass der Druck in dem Behälterinnenraum 5a sich verringert und Flüssigkeit bis zum gewünschten Mindestfüllstand aufsteigen kann.

Die Innendurchmesser dₐ und d_{c} sowie der Durchmesser d_{a,min} der Flüssigkeitsöffnung sind im Rahmen der Erfindung so gewählt, dass diese größer als die Kapillarlänge der Flüssigkeit sind, vorzugsweise mindestens das Doppelte der Kapillarlänge. Dadurch wird verhindert, dass sich Tropfen bilden, die sich in den entsprechenden Abschnitten festsetzen können. Auch kann beispielsweise der Abstand dₑ der Elektrode 19a der Füllstandsmessvorrichtung 19 von der Behälterwand 15 so gewählt sein, dass dieser mindestens die zweifache Kapillarlänge beträgt.

### Bezugszeichenliste

- 1: Sensorvorrichtung
- 3: Anschlussvorrichtung
- 3a: Flüssigkeitsdurchlass
- 5: Behälter
- 5a: Behälterinnenraum
- 5b: unterer Bereich
- 5c: oberer Bereich
- 7: Blende
- 9: Prallblech
- 11: Sensoranschlussrohr
- 11a: Sensoranschlussrohrwand
- 13: Sensor
- 15: Behälterwand
- 17: Isolierung
- 19: Füllstandsmessvorrichtung
- 19a: Elektrode
- 21: Gasversorgungsleitung
- 23: Gasspeicher
- 25: Gasventil
- 27: Gasauslassvorrichtung
- 29: Gasauslassventil
- 100: Flüssigkeitssystem
- 110: Rohrleitung

## Patentansprüche

1. Sensorvorrichtung (1) für ein Flüssigkeitssystem (100) mit einer Flüssigkeit
- mit einer Anschlussvorrichtung (3) zu dem Flüssigkeitssystem (100), wobei die Anschlussvorrichtung (3) einen Flüssigkeitsdurchlass (3a) für die Flüssigkeit bildet, der einen Innendurchmesser dₐ aufweist
- mit einem Behälter (5) mit einem Behälterinnenraum (5a), wobei der Behälter (5) oberhalb der Anschlussvorrichtung (5) angeordnet ist, wobei der Behälterinnenraum (5a) mit dem Flüssigkeitsdurchlass (3a) verbunden ist und ein Volumen V_{b} aufweist,
wobei der Behälter (5) einen unteren Bereich (5b) aufweist, der sich von einem unteren Ende des Behälters (5), an dem die Anschlussvorrichtung (3) angeordnet ist, nach oben erstreckt, wobei im Normalzustand der Behälter (5) in dem unteren Bereich (5b) zum Teil mit Flüssigkeit befüllt ist und eine Temperaturhalteeinrichtung aufweist, wobei die Temperaturhalteeinrichtung die in dem unteren Bereich des Behälters (5b) angeordnete Flüssigkeit auf einer Temperatur oberhalb des Schmelzpunktes T_{S,Fl} der Flüssigkeit hält,
und einen oberen Bereich (5c) aufweist, der sich von dem unteren Bereich (5a) aus nach oben bis zu einem oberen Ende des Behälters (5) erstreckt, wobei der obere Bereich (5c) einen ersten Abkühlabschnitt für in den oberen Bereich (5c) des Behälters aufsteigende Flüssigkeit bildet, und
- mit einem Sensoranschlussrohr (11), das mit dem Behälter (5) am oberen Ende des Behälters (5) verbunden ist und mit dem Behälter (5) in offener Verbindung steht, wobei das Sensoranschlussrohr (11) einen zweiten Abkühlabschnitt bildet, in dem in das Sensoranschlussrohr (11) aufsteigende die Flüssigkeit unter den Erstarrungspunkt der Flüssigkeit abkühlbar ist, wobei das Sensoranschlussrohr (11) ein Volumen V_{c} aufweist, wobei ein Sensor (13) am Ende des Sensoranschlussrohres (11) angeordnet ist,
wobei gilt: V_{c} « V_{b}.

2. Sensorvorrichtung nach Anspruch 1, **dadurch gekennzeichnet, dass** der Behälter (5) einen Innendurchmesser d_{b} aufweist, wobei gilt:
dₐ < d_{b}, vorzugsweise dₐ ≪ d_{b}.

3. Sensorvorrichtung nach Anspruch 1 oder 2, **dadurch gekennzeichnet, dass** die Temperaturhalteeinrichtung durch eine Isolierung (17) einer Behälterwand (15) des unteren Bereichs (5b) des Behälters (5) und/oder eine Heizeinrichtung gebildet ist.

4. Sensorvorrichtung nach einem der Ansprüche 1 bis 3, **dadurch gekennzeichnet, dass** eine Abkühlung von in den oberen Bereich (5c) des Behälters (5) aufsteigender Flüssigkeit in dem durch den oberen Bereich (5c) des Behälters (5) gebildeten ersten Abkühlabschnitt durch natürliche Konvektion an einer Behälterwand (15) des oberen Bereichs des Behälters (5) erfolgt.

5. Sensorvorrichtung nach einem der Ansprüche 1 bis 4, **dadurch gekennzeichnet, dass** der obere Bereich (5c) des Behälters (5) eine erste Kühleinrichtung aufweist.

6. Sensorvorrichtung nach einem der Ansprüche 1 bis 5, **dadurch gekennzeichnet, dass** eine Abkühlung von in das Sensoranschlussrohr (11) aufsteigender Flüssigkeit in dem durch das Sensoranschlussrohr (11) gebildeten zweiten Abkühlabschnitt durch eine vorgegebene Wärmekapazität einer Sensoranschlussrohrwand (11a) erfolgt.

7. Sensorvorrichtung nach einem der Ansprüche 1 bis 6, **dadurch gekennzeichnet, dass** das Sensoranschlussrohr (11) eine zweite Kühleinrichtung aufweist, und/oder dass das Sensoranschlussrohr (11) eine Aufheizvorrichtung aufweist.

8. Sensorvorrichtung nach einem der Ansprüche 6 oder 7, **dadurch gekennzeichnet, dass** für das Sensoranschlussrohr gilt: ${d}_{ca} = {d}_{c} ⋅ \sqrt{1 + S ⋅ \frac{\left({c}_{p , Fl}⋅\left({T}_{P}-{T}_{S , Fl}\right)+Δ{h}_{S , Fl}\right) ⋅ {ρ}_{Fl}}{{ρ}_{Rohr ⋅ \left({c}_{p , Rohr}⋅\left({T}_{S , Fl}-{T}_{Rohr , nom}\right)\right)}}}$ wobei
d_{ca} der Außendurchmesser des Sensoranschlussrohres,
d_{c} der Außendurchmesser des Sensoranschlussrohres,
S ein vorgegebener Sicherheitsfaktor,
C_{p,Fl} die spezifische Wärmekapazität der Flüssigkeit,
T_{P} eine maximale Prozesstemperatur gemäß Auslegung des Flüssigkeitssystems,
T_{S,Fl} die Schmelztemperatur der Flüssigkeit,
Δh_{S,Fl} die Schmelzenthalphie der Flüssigkeit,
ρ_{Fl} die Dichte der Flüssigkeit,
ρ_{Rohr} die Dichte des Materials der Sensoranschlussrohrwand, C_{p,Rohr} die spezifische Wärmekapazität des Materials der Sensoranschlussrohrwand und
T_{Rohr,nom} eine vorgegebene nominelle Temperatur im Sensoranschlussrohr ist.

9. Sensorvorrichtung nach einem der Ansprüche 1 bis 8 **dadurch gekennzeichnet, dass** das Sensoranschlussrohr (11) einen Innendurchmesser d_{c} aufweist, wobei gilt:
3 mm ≤ d_{c} ≤ 15 mm, und/oder
dass für den Innendurchmesser d_{b} des Behälters (5) gilt: 20 mm ≤ d_{b} ≤ 120 mm.

10. Sensorvorrichtung nach einem der Ansprüche 1 bis 9, **dadurch gekennzeichnet, dass** an dem Flüssigkeitsdurchlass (3a) ein Spritzschutz angeordnet ist, wobei vorzugsweise der Spritzschutz durch ein Prallblech (9) gebildet ist, das mit Abstand von dem Flüssigkeitsdurchlass (3a), den Flüssigkeitsdurchlass (3a) überdeckend angeordnet ist.

11. Sensorvorrichtung nach einem der Ansprüche 1 bis 10, **dadurch gekennzeichnet, dass** der Flüssigkeitsdurchlass (3a) eine Drossel für die Flüssigkeit bildet, und/oder dass in dem Behälter (5) und dem Sensoranschlussrohr (11) oberhalb der Flüssigkeit ein kompressibles Gas angeordnet ist.

12. Sensorvorrichtung nach einem der Ansprüche 1 bis 11, **dadurch gekennzeichnet, dass** in dem Behälter (5) eine Füllstandsmessvorrichtung (19) angeordnet ist.

13. Sensorvorrichtung nach Anspruch 11 oder 12, **dadurch gekennzeichnet, dass** an dem Sensoranschlussrohr (11) eine Gasversorgungsleitung (21) angeschlossen ist, über die Gas in das Sensoranschlussrohr (11) einleitbar ist.

14. Sensorvorrichtung nach einem der Ansprüche 1 bis 13, **dadurch gekennzeichnet, dass** für den Innendurchmesser dₐ des Flüssigkeitsdurchlasses (3a) und/oder den Innendurchmesser d_{c} des Sensoranschlussrohres (11) gilt $> \sqrt{\frac{γ}{{ρ}_{Fl} ⋅ g}}$, vorzugweise $> 2 ⋅ \sqrt{\frac{γ}{{ρ}_{Fl} ⋅ g}}$ wobei
ρ_{Fl} die Dichte der Flüssigkeit,
γ die Oberflächenspannung des Fluids und
g die Erdbeschleunigung ist.

15. Sensorvorrichtung nach einem der Ansprüche 1 bis 14, **dadurch gekennzeichnet, dass** der Sensor (13) ein Drucksensor, ein Elektrochemie-Sensor oder ein Temperatursensor ist.
